# EUROPÄISCHE PATENTSCHRIFT

(11) **EP 1 057 710 B1**
(45) Veröffentlichungstag und Bekanntmachung des Hinweises auf die Patenterteilung: **25.10.2006**
(21) Anmeldenummer: 00110918.0
(22) Anmeldetag: 24.05.2000
(51) Int. Cl.: B62D 1/18, B62D 1/19

(54) **Kraftfahrzeuglenkung**
Vehicle steering apparatus
Direction de véhicule

(30) Priorität: 01.06.1999 DE 19925209
(43) Veröffentlichungstag der Anmeldung: 06.12.2000
(73) Patentinhaber: MAN Nutzfahrzeuge Aktiengesellschaft, 80976 München (DE)
(72) Erfinder: Rieck, Gerhard, Dipl.-Ing., 81247 München (DE); Albertshofer, Günter, Dipl.-Ing., 81927 München (DE)

(56) Entgegenhaltungen:
- WO-A-00/18632
- DE-A- 19 829 239
- US-A- 5 871 233

## Beschreibung

### Stand der Technik

Die Erfindung geht aus von einer Kraftfahrzeuglenkung, insbesondere von einer Nutzfahrzeuglenkung, gemäß der Gattung von Patentanspruch 1.

Eine solche Kraftfahrzeuglenkung ist aus der WO 00/18632 und der US 5 871 233 bekannt und enthält eine Lenksäule, welche ein mit einem Airbag versehenes Lenkrad trägt. Die Lenksäule ist an einer Stirnwand des Kraftfahrzeugaufbaues abgestützt und gegenüber dieser in einem bestimmten Winkel geneigt.

Im Allgemeinen kann es bei einem Frontalaufprall eines Kraftfahrzeuges wegen der möglichen Verformung der Stirnwand und wegen der Beschleunigung des Lenksäulenoberteiles nach vorne zu einer Änderung der Lenksäulenneigung in Form einer Aufwärtsbewegung des Lenkrades kommen. Eine ungünstige Position des Fahrers relativ zum aus dem Lenkrad austretenden Airbag wäre die Folge. Das Resultat kann eine hohe Brustintrusion sein, da häufig nur der Kopf vom Airbag abgefangen wird und die Brust des Fahrers auf den unteren Lenkradkranz durchschlägt und nicht, wie geplant, durch den Airbag abgestützt wird.

Bei Nutzfahrzeugen ist die Lenksäule bereits im Ausgangszustand relativ steil angestellt, so daß der Winkel des Fahreroberkörpers relativ zum Lenkrad beim Aufschlag schon unter der Annahme einer durch den Frontalcrash unveränderten Neigung der Lenksäule ungünstig ist. In der Regel stellt sich die Lenksäule bei einem Frontalcrash aber noch weiter auf, so daß sich bei Nutzfahrzeugen das Problem einer besonders geringen Abstützung des Brustbereiches durch den Lenkrad-Airbag ergibt.

Aus der DE 35 44 345 A1 ist eine Kraftfahrzeuglenkung bekannt, bei welcher die Lenksäule mittels eines durch einen Kollisionssensor freigebbaren Energiespeichers um eine Schwenkachse schwenkbar ist, um die unerwünschte Aufstellneigung des Lenkrades zu kompensieren.

Bei dem Energiespeicher gemäß der bekannten Schrift kann es sich um einen Zylinder-Kolbentrieb handeln, welcher über eine kraftübertragende Verbindung mit der Lenksäule verbunden ist und im Kollisionsfall durch Druckbeaufschlagung die Lenksäule in gewünschter Weise um die Schwenkachse schwenkt. Jedoch erscheint die Zeitdauer, die für die Druckbeaufschlagung des Zylinder-Kolbentriebes benötigt wird, gemessen an der schlagartig stattfindenden Oberkörperverlagerung des Fahrers zu lange, um eine rechtzeitige Neigungsverstellung der Lenksäule zu gewährleisten. Außerdem muß zur Versorgung des Zylinder-Kolbentriebes ständig Druckmittel in einem Behälter bevorratet werden, wobei durch die mit der Zeit unvermeidbaren Leckverluste die Gefahr der Unwirksamkeit der Neigungsverstellung besteht.

Gemäß einer Variante der bekannten Fahrzeuglenkung beinhaltet der Energiespeicher eine in Wirkverbindung mit der Lenksäule und unter Vorspannung stehende Feder, wobei im Kollisionsfall eine Arretierung der Lenksäule durch Sprengung gelöst und hierdurch die Feder ein Drehmoment auf die nun frei schwenkbare Lenksäule ausüben kann. Nachteilig ist hierbei, daß die Feder ständig unter Vorspannung steht, weshalb diese mit der Zeit nachläßt.

Darüber hinaus stehen der Zylinder-Kolbentrieb und die Feder mit der Lenksäule ständig in Wirkverbindung, wodurch eine fahrerbetätigte Lenksäulenverstellung im kollisionsfreien Betrieb behindert wird.

Der vorliegenden Erfindung liegt die Aufgabe zugrunde, eine Kraftfahrzeuglenkung der eingangs erwähnten Art zu schaffen, durch welche im Kollisionsfall eine Verschwenkung der Lenksäule auf den Fahrer zu mit der gebotenen hohen Geschwindigkeit erfolgt und zudem über einen längeren Zeitraum zuverlässig gewährleistet ist.

Erfindungsgemäß wird diese Aufgabe durch die kennzeichnenden Merkmale von Anspruch 1 gelöst.

Die erfindungsgemäße Kraftfahrzeuglenkung hat den Vorteil, daß durch die schlagartige und zeitgleich mit der Auslösung des Lenkrad-Airbags stattfindende Längenverkürzung des Gurtschloßretraktors die gewünschte Lenksäulenneigungsverstellung äußerst schnell erreicht wird. Somit sind ungünstige Winkellagen des Lenkrad-Airbags relativ zum Fahrer korrigierbar, noch bevor es zum Aufprallkontakt des Fahrers auf den Lenkrad-Airbag kommt.

Vorteilhaft ist außerdem, daß die durch Auslösung des zusätzlichen Airbags erzeugte Verschwenkung der Lenksäule auf den Fahrer zu unabhängig vom Verformungsgrad des Fahrzeugaufbaues erfolgt, so daß die insbesondere bei Nutzfahrzeugen bereits im kollisionsfreien Ausgangszustand ungünstige Winkellage der Lenksäule auch bei geringen Verformungen des Fahrzeugaufbaues korrigierbar ist.

Die Praxis hat gezeigt, daß die Zündung von Gurtschloßretraktoren im Kollisionsfall äußerst zuverlässig erfolgt. Da es sich bei dem Gurtschloßretraktor um ein handelsübliches Standardbauteil handelt, sind die Kosten für die erfindungsgemäße Kraftfahrzeuglenkung vergleichsweise gering. Insbesondere müssen keine zusätzlichen Energiespeicher vorgesehen werden, deren Energiepotential ständig erneuert werden muß.

Der Gurtschlossretraktor ist mit seinem einen Ende am Fahrzeugaufbau schwenkbar angelenkt und weist an seinem anderen Ende ein Gurtschloss auf, in welchem eine Gurtzunge eines am unteren Lenksäulenteil befestigten Gurtbandes verrastet ist.

Durch die in den Unteransprüchen aufgeführten Maßnahmen sind vorteilhafte Weiterbildungen und Verbesserungen der im Patentanspruch 1 angegebenen Kraftfahrzeuglenkung möglich.

Gemäß besonders zu bevorzugender Maßnahmen weist die Arretierung eine druckluftbetätigbare Pneumatikzylinder-Kolben-Einheit auf, durch welche bei fahrerbetätigter Druckbeaufschlagung ein Reibschluß zwischen der Lenksäule und dem Lenksäulenbock aufhebbar und somit eine Verschiebung und Drehung der Lenksäule gegenüber dem Lenksäulenbock ermöglichbar ist. Zweckmäßig ist die Pneumatikzylinder-Kolben-Einheit zeitgleich mit der Auslösung des Gurtschloßretraktors mit Druck beaufschlagbar, so daß der Reibschluß zwischen der Lenksäule und dem Lenksäulenbock schlagartig gelöst und wegen des wegfallenden Widerstandes die Lenksäule schneller in die gewünschte Neigung verstellt werden kann.

### Zeichnungen

Nachstehend ist ein Ausführungsbeispiel der Erfindung in den Zeichnungen dargestellt und in der nachfolgenden Beschreibung näher erläutert. In den Zeichnungen zeigen :
- Fig. 1: eine Seitenansicht einer Nutzfahrzeuglenkung mit einem Lenkrad-Airbag und mit einem Gurtschloßretraktor, wobei sich der Airbag und der Gurtschloßretraktor im unausgelösten Zustand befinden;
- Fig.2: eine Seitenansicht der Nutzfahrzeuglenkung von Fig.1, wobei der Lenkrad-Airbag und der Gurtschloßretraktor ausgelöst sind.

### Beschreibung des Ausführungsbeispieles

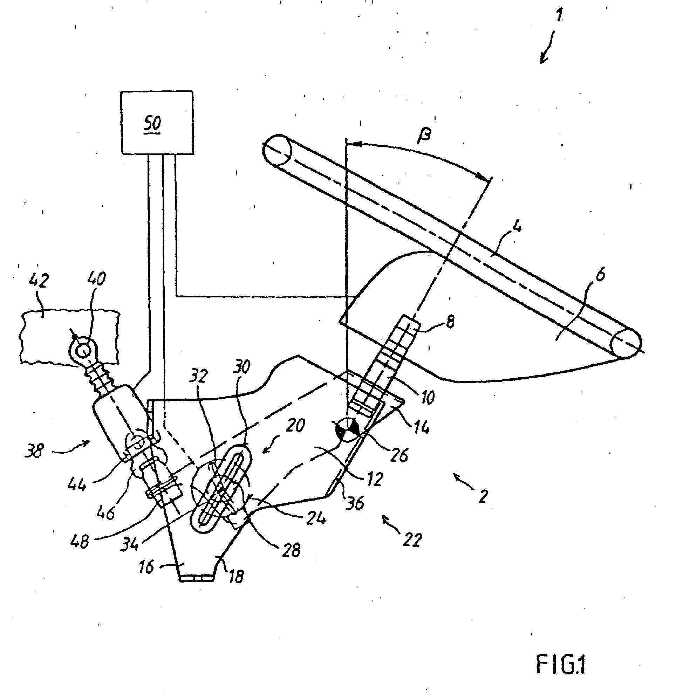

Die in Fig. 1 insgesamt mit 1 bezeichnete Fahrzeuglenkung ist gemäß der bevorzugten Ausführungsform eine Nutzfahrzeuglenkung. Die Nutzfahrzeuglenkung 1 enthält ein am oberen Ende einer Lenksäule 2 angeordnetes Lenkrad 4 mit einem Lenkrad-Airbag 6, welcher gemäß dem in Fig.1 dargestellten kollisionsfreien Zustand des Nutzfahrzeuges nicht entfaltet ist.

Die Lenksäule 2 enthält einen oberen Lenksäulenteil 8 mit einem Mantelrohr 10, in welchem eine mit dem Lenkrad 4 verbundene Lenkspindel drehbar aufgenommen ist, die ihrerseits mit einem nicht dargestellten Lenkgetriebe in Verbindung steht. Im kollisionsfreien Zustand nimmt der obere Lenksäulenteil 8 eine Lenksäulenneigung β relativ zur Vertikalen ein, welche bei Nutzfahrzeugen relativ gering ist und sich hieraus ein ungünstiger Aufprallwinkel des Fahrers auf dem Lenkrad 4 ergibt.

Dem oberen Lenksäulenteil 8 schließt sich ein unterer, gegenüber dem oberen Lenksäulenteil 8 stumpfwinklig vorgezogener Lenksäulenteil an, der als U-förmiges, nach unten offenes Verschiebeblech 12 ausgebildet ist. Die beiden Schenkel 14 des U-förmigen Verschiebebleches 12 sind von zwei Wangen 16 eines am Fahrzeugaufbau befestigten Lenksäulenbockes 18 umgriffen und innerhalb der Wangen 16 mittels einer Kulissenführung 20 verschieb- und schwenkbar geführt, wobei wegen der Seitenansicht gemäß Fig.1 nur jeweils ein Schenkel 14 und eine Wange 16 zu sehen sind.

Die Kulissenführung 20 bildet einen Teil eines fahrerbetätigbaren Verstellmechanismus 22 der Lenksäule 2, welcher darüber hinaus eine in Fig. 1 im Bereich der Kulissenführung 20 durch eine gestrichelte Kreislinie dargestellte Pneumatikzylinder-Kolben-Einheit 24 sowie eine Schwenkachse 26 aufweist. Die Pneumatikzylinder-Kolben-Einheit 24 ist am Lenksäulenbock 18 parallel zur Schwenkachse 26 zwischen den beiden Schenkeln 14 des den unteren Lenksäulenteil bildenden U-förmigen Verschiebebleches 12 aufgenommen, wobei an den freien Enden ihres Kolbens und Zylinders Klemmbacken 28 ausgebildet sind, welche in Fig. 1 ebenfalls durch jeweils einen gestrichelten Kreisbogen angedeutet sind.

Die Pneumatikzylinder-Kolben-Einheit 24 ist fahrerbetätigt druckbeaufschlag- und druckentlastbar, wobei bei Druckbeaufschlagung durch die sich dann nach innen bewegenden Klemmbacken 28 die Schenkel 14 des U-fömigen Verschiebebleches 12 zur Aufhebung eines Reibschlusses von innen gegen die Wangen 16 des Lenksäulenbockes 18 entspannbar und somit eine Verschiebung und Verschwenkung der Lenksäule 2 gegenüber dem stationären Lenksäulenbock 18 im Rahmen des durch die Kulissenführung 20 gegebenen Spielraumes möglich ist.

Die Kulissenführung 20 umfaßt einerseits als gerade Ausschnitte in den Wangen 16 des Lenksäulenbockes 18 ausgebildete und sich parallel zum oberen Lenksäulenteil 8 erstreckende Verschiebekulissen 30 und andererseits als Kreisbogenausschnitte in den Schenkeln 14 des U-förmigen Verschiebebleches 12 ausgebildete und sich in Umfangsrichtung einer gedachten Kreisbahn um die Schwenkachse 26 erstreckende Schwenkkulissen 32, wobei sich die Verschiebekulissen 30 und die Schwenkkulissen 32 beidseits paarweise kreuzend überdecken und mittels von den Klemmbacken 28 der Pneumatikzylinder-Kolben-Einheit 24 achsmittig nach außen wegragenden Achsstummeln 34 gegeneinander geführt sind.

Die Schwenkachse besteht aus einer mit dem oberen Ende des U-förmigen Verschiebebleches 12 in Verbindung stehenden und quer zu diesem verlaufenden Rolle 26, deren Enden in Führungsschienen 36 in den Wangen 16 des Lenksäulenböckes 18 beidseitig geführt sind. Um eine gleichsinnige Verstellung zu ermöglichen, sind die Führungsschienen 36 parallel zur Längserstreckung der Verschiebekulissen 30 angeordnet.

Bei Druckbelastung der Pneumatikzylinder-Kolben-Einheit 24 kann somit die Lenksäule 2 relativ zum Lenksäulenbock 18 längs der Verschiebekulissen 30 axial und zugleich um die Schwenkachse 26 in ihrer Neigung verstellt werden, wobei sie über die in den Führungsschienen 36 des Lenksäulenbockes 18 gehaltene Schwenkachse 26 abgestützt ist und die Schwenkbewegung durch die Schwenkkulissen 32 geführt wird. Die eingestellte Lage der Lenksäule 2 ist dann durch den mit der fahrerbetätigten Druckbeaufschlagung der Pneumatikzylinder-Kolben-Einheit 24 erzeugten Reibschluß zwischen den Schenkeln 14 des unteren Lenksäulenteiles 12 und den Wangen 16 des Lenksäulenbockes 18 fixierbar.

Ein erfindungsgemäß als pyrotechnischer Gurtschloßretraktor 38 ausgebildetes Stellelement zum schlagartigen Verstellen der Neigung der Lenksäule 2 während einer Frontalkollision ist mit seinem einen Ende über eine Befestigungsöse 40 am Fahrzeugaufbau 42 schwenkbar angelenkt. An seinem anderen Ende, ist ein Gurtschloß 44 befestigt, in welchem eine Gurtzunge 46 eines Gurtbandes 48 verrastet ist. Das Gurtband 48 ist am unteren Ende des unteren Lenksäulenteiles 12 angeordnet und verbindet dessen beide Schenkel 14 mit leichter Gurtlose miteinander. Hierzu sind in den Schenkeln 14 Laschen vorgesehen, durch welche die Enden des Gurtbandes 48 geführt sind. Durch die Gurtlose und die schwenkbare Anlenkung des Gurtschloßretraktors 38 am Fahrzeugaufbau 42 bleibt genügend Spielraum für die fahrerbetätigte Axial- und Neigungsverstellung der Lenksäule 2 im kollisionsfreien Betrieb. Alternativ könnte das Gurtband 48 auch unlösbar mit dem Gurtschloßretraktor 38 verbunden sein.

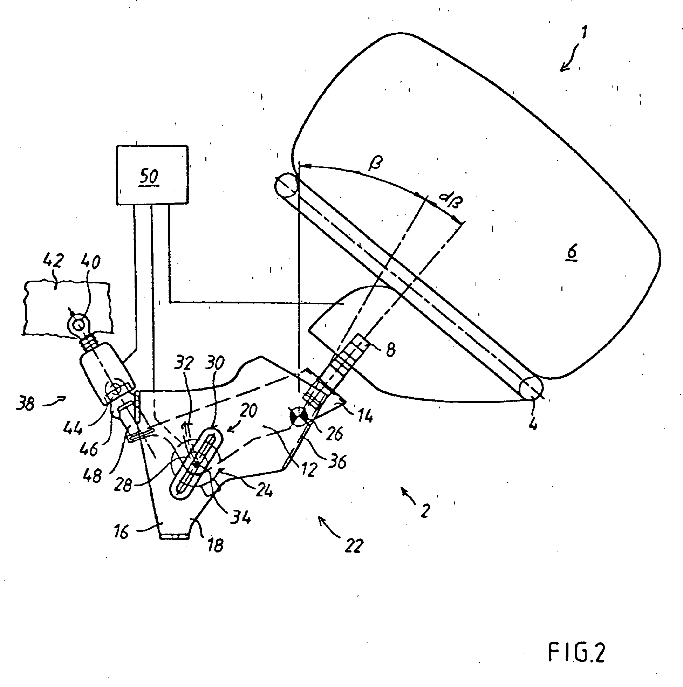

Bei einer Frontalkollision des Nutzfahrzeugs mit einem Hindernis ergibt sich die in Fig. 2 dargestellte Situation, bei der abhängig vom Signal eines Kollisionssensors je ein Auslösesignal für den Gurtschloßretraktor 38 und für den Lenkrad-Airbag 6 von einem Airbag-Steuergerät 50 zeitgleich ausgesteuert werden. Hierdurch wird innerhalb des Gurtschloßretraktors 38 eine Sprengladung gezündet, woraufhin dieser sich in seiner Länge schlagartig verkürzt und das an ihm befestigte Gurtband 48 nach oben mitnimmt. Wegen des zwischen dem Gurtband 48 und der Schwenkachse 26 gebildeten Hebelarmes ist dadurch ein Drehmoment auf die Lenksäule 2 um die Schwenkachse 26 erzeugbar. Da der Gurtschloßretraktor 38 und die Schwenkachse 26 an verschiedenen Enden des unteren Lenksäulenteiles 12 angeordnet sind, ergibt sich eine relativ große Hebelarmlänge, was sich günstig auf das erzeugte Schwenkmoment auswirkt.

Gemäß der bevorzugten Ausführungsform wird die Pneumatikzylinder-Kolben-Einheit 24 vom Airbag-Steuergerät 50 zeitgleich mit der Auslösung des Gurtschloßretraktors 38 und des Lenkrad-Airbags 6 mit Druck beaufschlagt, wodurch die Arretierung der Lenksäule 2 in Form des Reibschlusses zwischen ihr und dem Lenksäulenbock 18 gelöst wird. Hierdurch wird eine ungehinderte Schwenkbewegung der Lenksäule 2 ausgehend von ihrer ursprünglichen Winkellage um einen Winkel dβ in Richtung auf den Fahrer erzielt. Alternativ kann der sich aus der schlagartigen Längenverkürzung des Gurtschloßretraktors 38 ergebende Impuls auf das Gurtband 48 so groß sein, daß der Reibschluß zwischen der Lenksäule 2 und dem Lenksäulenbock 18 auch ohne Lösen der Klemmverbindung überwunden werden kann.

Wie aus Fig.2 anschaulich hervorgeht, verschwenkt die Lenksäule 2 durch die Längenverkürzung des Gurtschloßretraktors 38 im Uhrzeigersinn so weit, bis die unteren Enden der in den Schenkeln 14 des unteren Lenksäulenteiles 12 ausgebildeten Schwenkkulissen 32 an den Achsstummeln 34 der stationären Pneumatikzylinder-Kolben-Einheit 24 anschlagen. Die für die Größe des Schwenkwinkels dβ maßgeblichen Parameter, wie z. B. die Bogenlänge der Schwenkkulissen 32, die Retraktionsfähigkeit des Gurtschloßretraktors 38, dessen Abstand vom Gurtband 48, die Länge des Hebelarmes zwischen Gurtband 48 und Schwenkachse 26 usw. sind so zu bemessen bzw. so aufeinander abzustimmen, daß die Verschwenkung der Lenksäule 2 um den Winkel dβ zum einen die im kollisionsfreien Betrieb vorhandene ursprüngliche Lenksäulenneigung β relativ zur Vertikalen vergrößert, um eine Lenkradposition ähnlich der beim Pkw zu erhalten, und darüber hinaus eine durch die Frontalkollision eventuell hervorgerufene Verkleinerung der ursprünglichen Lenksäulenneigung β (Aufstellneigung der Lenksäule) kompensiert.

## Patentansprüche

1. Kraftfahrzeuglenkung (1), insbesondere Nutzfahrzeuglenkung, mit einer ein Lenkrad (4) mit einem Lenkrad-Airbag (6) tragenden Lenksäule (2), wobei die Lenksäule (2) an einem Fahrzeugaufbau (18, 42) abgestützt und diesem gegenüber nach Überwinden oder Lösen einer Arretierung (22) mittels eines im Kollisionsfall aktivierten Stellelementes (38) um eine im wesentlichen quer zur Fahrzeuglängsachse verlaufende horizontale Schwenkachse (26) schwenkbar ist, wobei das Stellelement am Fahrzeugaufbau (18, 42) abgestützt und im Frontalkollisionsfall zeitgleich mit dem Lenkrad-Airbag (6) auslösbar ist und wobei nach Aktivierung des Stellelementes durch dieses ein Drehmoment auf die Lenksäule (2) um die Schwenkachse (26) derart erzeugbar ist, daß die Lenksäule (2) in Richtung auf den Fahrer zuschwenkbar ist, **dadurch gekennzeichnet, dass** als Stellelement ein pyrotechnischer Gurtschlossretraktor (38) vorgesehen ist, der mit seinem einen Ende am Fahrzeugaufbau (42) schwenkbar angelenkt ist und an seinem anderen Ende ein Gurtschloss (44) aufweist, in welchem eine Gurtzunge (46) eines am unteren Lenksäulenteil (12) befestigten Gurtbandes (48) verrastet ist, und wobei das im Frontalkollisionsfall auf die Lenksäule (2) wirkende Drehmoment nach Auslösung des Lenkrad-Airbags (6) durch eine **dadurch** auslösbare Längenverkürzung des Gurtschlossretraktors (38) erzeugt ist.

2. Kraftfahrzeuglenkung nach Anspruch 1, **dadurch gekennzeichnet, daß** sich die Lenksäule (2) über die Schwenkachse (26) am Fahrzeugaufbau (18, 42) nach Art eines Kipphebels abstützt, wobei die Schwenkachse (26) im wesentlichen einen oberen Lenksäulenteil (8) von einem unteren Lenksäulenteil (12) trennt und das Lenkrad (4) am oberen Ende des oberen Lenksäulenteiles (8) angeordnet ist und der Gurtschloßretraktor (38) mit dem unteren Lenksäulenteil (12) in Wirkverbindung steht.

3. Kraftfahrzeuglenkung nach einem der Ansprüche 1 oder 2, **dadurch gekennzeichnet, daß** die Arretierung einen fahrerbetätigbaren Verstellmechanismus (22) zur Neigungs- und Axialverstellung der Lenksäule (2) beinhaltet, mit einer Kulissenführung (20), durch welche die Schenkel (14) des unteren, als U-förmiges Verschiebeblech ausgebildeten Lenksäulenteiles (12) innerhalb von Wangen (16) eines am Fahrzeugaufbau (42) befestigten Lenksäulenbockes (18) verschieb- und schwenkbar geführt sind.

4. Kraftfahrzeuglenkung nach Anspruch 3, **dadurch gekennzeichnet, daß** das Gurtband (48) die Schenkel (14) des U-förmiges Verschiebebleches (12) miteinander verbindet und eine Gurtlose aufweist, durch welche im nicht ausgelösten Zustand des Gurtschloßretraktors (38) eine fahrerbetätigte Verstellung der Lenksäule (2) ermöglichbar ist.

5. Kraftfahrzeuglenkung nach Anspruch 3 oder 4, **dadurch gekennzeichnet, daß** die Kulissenführung (20) einerseits als gerade Ausschnitte in den Wangen (16) des Lenksäulenbockes (18) ausgebildete und parallel zur Lenksäulenlängsrichtung verlaufende Verschiebekulissen (30) und andererseits als Kreisbogenausschnitte in den Schenkeln (14) des U-förmigen Verschiebebleches (12) ausgebildete Schwenkkulissen (32) umfaßt, wobei die Verschiebekulissen (30) und die Schwenkkulissen (32) sich beidseits paarweise kreuzend überdecken und durch sie hindurchragende Achsen (34) gegeneinander geführt sind.

6. Kraftfahrzeuglenkung nach Anspruch 5, **dadurch gekennzeichnet, daß** die Schwenkachse vom fahrerbetätigbaren Verstellmechanismus (22) umfaßt ist und eine Rolle (26) beinhaltet, welche mit dem oberen Ende des U-förmigen Verschiebebleches (12) in Verbindung stehend quer zu diesem verläuft und deren Enden in Führungsschienen (36) in den Wangen (16) des Lenksäulenbockes (18) beidseitig geführt sind, welche parallel zur Längserstreckung der Verschiebekulissen (30) angeordnet sind.

7. Kraftfahrzeuglenkung nach Anspruch 6, **dadurch gekennzeichnet, daß** der fahrerbetätigbare Verstellmechanismus (22) eine Zylinder-Kolben-Einheit aufweist, vorzugsweise eine druckluftbetätigbare Pneumatikzylinder-Kolben-Einheit (24), durch welche bei fahrerbetätigter Druckbeaufschlagung ein vorhandener Reibschluß zwischen der Lenksäule (2) und dem Lenksäulenbock (18) aufhebbar ist, wodurch eine Verschiebung und Drehung der Lenksäule (2) gegenüber dem Lenksäulenbock (18) ermöglichbar ist.

8. Kraftfahrzeuglenkung nach Anspruch 7, **dadurch gekennzeichnet, daß** mittels der druckluftbetätigbaren Pnematikzylinder-Kolben-Einheit (24) die Schenkel (14) des U-fömigen Verschiebebleches (12) zur Erzeugung des Reibschlusses von innen gegen die Wangen (16) des Lenksäulenbockes (18) spannbar sind.

9. Kraftfahrzeuglenkung nach Anspruch 8, **dadurch gekennzeichnet, daß** der Gurtschloßretraktor (38) durch ein Signal eines Airbag-Steuergerätes (50) auslösbar ist, welches zeitgleich mit diesem ein weiteres Signal aussteuert, durch welches die Pneumatikzylinder-Kolben-Einheit (24) druckbeaufschlabar ist und hierdurch der Reibschluß zwischen der Lenksäule (2) und dem Lenksäulenbock (18) schlagartig lösbar ist.

## Claims

1. Steering system (1) for a motor vehicle, particularly a commercial vehicle, with a steering column (2) carrying a steering wheel (4) with a steering-wheel airbag (6), whereby the steering column (2) is supported on a vehicle superstructure (18, 42) and can, in respect of said vehicle superstructure (18, 42), be slewed, with the aid of an actuator (38) activated in the event of a collision, about a horizontal slewing shaft (26) extending basically in transverse direction relative to the vehicle longitudinal axis, after a locking mechanism (22) has been overcome or released, whereby the actuator is supported on the vehicle superstructure (18, 42) and, in the event of a head-on collision, can be released simultaneously with steering-wheel airbag (6) and whereby after activation of the actuator a torque about the slewing shaft (2) can be exerted on the steering column (2) by said actuator so that the steering column (2) can be slewed towards the driver, **characterised in that** a pyrotechnical belt lock retractor (38) is provided as actuator whose one end is slewably located on the vehicle superstructure (42) and whose other end features a belt lock (44) in which a belt tongue (46) of a belt band (48) fastened to the lower steering-column part (12) locks into place, and whereby the torque which in the event of a head-on collision acts on the steering column (2) is generated by the length of said belt lock retractor (38) being shortened after the release of the steering-wheel airbag (6), whereby said shortening of the length of the lock retractor (38) can be triggered by said release of the steering-wheel airbag (6).

2. Steering system for a motor vehicle according to Claim 1, **characterised in that** the steering column (2) is supported on the vehicle superstructure (18, 42) in the same way as a rocker arm via the slewing shaft (26) which basically separates an upper steering-column part (8) from a lower steering-column part (12) and the steering wheel (4) is arranged on the upper end of the upper steering-column part (8) and the belt lock retractor (38) is in a working connection with the lower steering-column part (12).

3. Steering system for a motor vehicle according to one of the Claims 1 or 2, **characterised in that** the locking mechanism includes an adjusting mechanism (22) which can be actuated by the driver and is designed for adjusting the steering column (2) in inclination and axial position, with a sliding-block guide (20), by means of which guide (20) the legs (14) of the lower steering-column part (12) designed as a U-shaped sliding plate can be guided within webs (16) of a steering-column block (18) fastened to the vehicle superstructure (42) in a sliding and slewable manner.

4. Steering system for a motor vehicle according to Claim 3, **characterised in that** the belt band (48) connects the legs (14) of the U-shaped sliding plate (12) with each other and features a belt slack device enabling driver-actuated adjustment of the steering column (2) if the belt lock retractor (38) is in the non-released condition.

5. Steering system for a motor vehicle according to the Claims 3 and 4, **characterised in that** the sliding-block guide (20) comprises on the one hand sliding blocks (30) designed as straight cutouts in the webs (16) of the steering-column block (18) and extending parallel to the steering-column longitudinal direction and, on the other hand, slewing blocks (32) designed as arc-type sections in the legs (14) of the U-shaped sliding plate (12), whereby the sliding blocks (30) and the slewing blocks (32) cover each other on both sides in a cross-type manner and are guided by shafts (34) extending through them in opposite directions.

6. Steering system for a motor vehicle according to Claim 5, **characterised in that** the slewing shaft is encompassed by the adjusting mechanism (22), which can be actuated by the driver, and includes a roller (26) which is connected to the upper end of the U-shaped sliding plate (12), extends in transverse direction relative to said plate (12) and whose ends are guided at both sides in guide rails (36) in the webs (16) of the steering-column block (18), which webs (16) are arranged parallel to the longitudinal extension of the sliding blocks (30).

7. Steering system for a motor vehicle according to Claim 6, **characterised in that** the adjusting mechanism (22) which can be actuated by the driver features a cylinder-piston unit, preferably a compressed-air-actuated cylinder-piston unit (24), by means of which an existing frictional connection between the steering column (2) and the steering-column block (18) can be lifted upon driver-actuated pressure supply, which makes it possible to shift and turn the steering column (2) relative to the steering-column block (18).

8. Steering system for a motor vehicle according to Claim 7, **characterised in that** for the generation of a frictional connection the legs (14) of the U-shaped sliding block (12) can be pressed against the inner side of the webs (16) of the steering-column block (18) by means of the compressed-air-actuated cylinder-piston unit (24).

9. Steering system for a motor vehicle according to Claim 8, **characterised in that** the belt lock retractor (38) can be released by means of a signal from an airbag control unit (50) which together with said signal puts out another signal, by means of which the cylinder-piston unit (24) can be charged with compressed air and, as a result of this, the frictional connection between the steering colum (2) and the steering-column block (18) can be released instantly.

## Revendications

1. Direction de véhicule automobile (1), notamment direction de véhicule industriel, comprenant une colonne de direction (2) portant un volant de direction (4) doté d'un airbag de volant (6), la colonne de direction (2) étant appuyée sur une structure du véhicule (18, 42) et étant pivotante, par rapport à celle-ci après qu'un dispositif de blocage (22) ait été surmonté ou débloqué au moyen d'un élément de réglage (38) activé en cas de collision, autour d'un axe de pivotement horizontal s'étendant essentiellement transversalement par rapport à l'axe longitudinal du véhicule, l'élément de réglage étant appuyé sur la structure du véhicule (18, 42) et pouvant être déclenché, en cas de collision frontale, en même temps que l'airbag de volant (6), et un couple pouvant être produit sur la colonne de direction (2) autour de l'axe de pivotement (26) par l'élément de réglage après l'activation de celui-ci, de telle manière que la colonne de direction (2) soit pivotante en direction du chauffeur, **caractérisée en ce qu'**un rétracteur pyrotechnique d'attache de ceinture (38) est prévu comme élément de réglage, qui est articulé de manière pivotante sur la structure du véhicule (42) avec l'une de ses extrémités et qui, sur son autre extrémité, présente une attache de ceinture (44), dans laquelle est encliquetée une languette de ceinture (46) d'une sangle de ceinture (48) fixée sur la partie inférieure de la colonne de direction (12), et le couple agissant sur la colonne de direction (2) en cas de collision frontale étant créé après le déclenchement de l'airbag de volant (6) par un raccourcissement de longueur ainsi déclenché par le rétracteur d'attache de ceinture (38).

2. Direction de véhicule automobile selon la revendication 1, **caractérisée en ce que** la colonne de direction (2) s'appuie sur la structure du véhicule (18, 42) par l'intermédiaire de l'axe de pivotement (26) de manière similaire à un culbuteur, l'axe de pivotement (26) séparant essentiellement une partie supérieure (8) de la colonne de direction d'une partie inférieure (12) de la colonne de direction et le volant de direction (4) étant disposé sur l'extrémité supérieure de la partie supérieure (8) de la colonne de direction et le rétracteur d'attache de ceinture (38) étant en liaison active avec la partie inférieure (12) de la colonne de direction.

3. Direction de véhicule automobile selon l'une des revendications 1 ou 2, **caractérisée en ce que** le dispositif de blocage comprend un mécanisme de réglage (22) pouvant être commandé par le chauffeur, destiné au réglage de l'inclinaison et au réglage axial de la colonne de direction (2), doté d'un guidage à coulisse (20), au moyen duquel les côtés (14) de la partie inférieure (12) de la colonne de direction, exécutée comme tôle coulissante en forme de U, sont guidés de manière coulissante et pivotante à l'intérieur de flasques (16) d'un support (18) de la colonne de direction fixé sur la structure du véhicule (42).

4. Direction de véhicule automobile selon la revendication 3, **caractérisée en ce que** la sangle de ceinture (48) raccorde entre eux les côtés (14) de la tôle coulissante (12) en forme de U et présente un mou de sangle au moyen duquel un réglage commandé par le chauffeur de la colonne de direction (2) est rendu possible à l'état non déclenché du rétracteur d'attache de ceinture (38).

5. Direction de véhicule automobile selon la revendication 3 ou 4, **caractérisée en ce que** le guidage à coulisse (20) comprend, d'une part, des coulisses de décalage (30) exécutées comme des sections droites dans les flasques (16) du support (18) de la colonne de direction et s'étendant parallèlement à la direction longitudinale de la colonne de direction et, d'autre part, des coulisses pivotantes (32) exécutées comme des sections d'arcs de cercle dans les côtés (14) de la tôle coulissante (12) en forme de U, les coulisses de décalage (30) et les coulisses pivotantes (32) se recouvrant des deux côtés par paires en se croisant et étant guidées les unes contre les autres par des axes (34) les traversant en les dépassant.

6. Direction de véhicule automobile selon la revendication 5, **caractérisée en ce que** l'axe de pivotement est entouré par le mécanisme de réglage (22) commandable par le chauffeur et qu'il comprend un galet (26) lequel, étant en liaison avec l'extrémité supérieure de la tôle coulissante (12) en forme de U, s'étend transversalement par rapport à cette tôle coulissante et dont les extrémités sont guidées des deux côtés dans des rails de guidage (36) dans les flasques (16) du support (18) de la colonne de direction, lesquelles sont disposées parallèlement à l'étendue longitudinale des coulisses de décalage (30).

7. Direction de véhicule automobile selon la revendication 6, **caractérisée en ce que** le mécanisme de réglage (22) commandable par le chauffeur présente une unité cylindre-piston, de préférence une unité cylindre pneumatique-piston (24) commandable par air comprimé, au moyen de laquelle, lors d'une montée en pression commandée par le chauffeur, une friction présente entre la colonne de direction (2) et le support (18) de la colonne de direction peut être supprimée, sur quoi un décalage et une rotation de la colonne de direction (2) sont rendus possibles par rapport au support (18) de la colonne de direction.

8. Direction de véhicule automobile selon la revendication 7, **caractérisée en ce que** les côtés (14) de la tôle coulissante (12) en forme de U peuvent être tendus au moyen de l'unité cylindre pneumatique-piston (24) commandable par air comprimé afin de créer la friction depuis l'intérieur contre les flasques (16) du support (18) de la colonne de direction.

9. Direction de véhicule automobile selon la revendication 8, **caractérisée en ce que** le rétracteur d'attache de ceinture (38) peut être déclenché par un signal d'un boîtier électronique d'airbag (50) qui pilote, en même que ce signal" un autre signal par lequel l'unité cylindre pneumatique-piston (24) peut être alimenté en air comprimé et, par ce moyen, une friction peut brusquement être déclenchée entre la colonne de direction (2) et le support (18) de la colonne de direction.
